# EUROPÄISCHE PATENTSCHRIFT

(11) **EP 1 664 918 B1**
(45) Veröffentlichungstag und Bekanntmachung des Hinweises auf die Patenterteilung: **03.01.2007**
(21) Anmeldenummer: 04786867.4
(22) Anmeldetag: 22.09.2004
(51) Int. Cl.: G03B 1/44, G03B 1/22

(54) **FILMSCHALTWERK MIT VERÄNDERBARER SEITENFÜHRUNG**
FILM-FEEDING MECHANISM
MECANISME D'AVANCEMENT DE PELLICULE

(30) Priorität: 25.09.2003 DE 10345656
(43) Veröffentlichungstag der Anmeldung: 07.06.2006
(73) Patentinhaber: ARNOLD & RICHTER CINE TECHNIK GMBH & CO. BETRIEBS KG, 80799 München (DE)
(72) Erfinder: TRAUNINGER, Walter, A-2381 Laab im Walde (AT)
(74) Vertreter: Ninnemann, Detlef
(86) Internationale Anmeldenummer: PCT/DE2004/002154
(87) Internationale Veröffentlichungsnummer: WO 2005/031453

(56) Entgegenhaltungen:
- DE-A1- 4 013 909
- GB-A- 783 568
- US-A- 5 266 979
- US-A- 5 402 166
- US-A1- 2002 171 808

## Beschreibung

Die Erfindung bezieht sich auf ein Filmschaltwerk mit mindestens einem Transportgreifer zum intermittierenden Transport eines Laufbildfilmes und mindestens einem Sperrgreifer zur Sicherung des Bildstandes gemäß dem Oberbegriff des Anspruchs 1.

Aus der US 2002/171808 A1 ist ein Laufbildfilmprojektor bekannt, der seitliche Filmführungsschienen aufweist, deren Position in Bezug auf die Seitenkanten des Laufbildfilms bei der Herstellung bzw. Endjustage einstellbar ist.

Die US 5 266 979 A offenbart einen Filmabtaster, wobei zur Reduzierung von seitlichen Auslenkungen des intermittierend durchlaufenden Films am Bildfenster die Position eines seitlichen Filmführungslements in Bezug auf eine Seitenkante des Films bzw. in Bezug auf das der anderen Seitenkante zugeordnete feststehende Filmführungelement während des Filmlaufs durch eine Andruckfeder senkrecht zur Filmseitenkante veränderbar ist.

Aus der DE 40 13 909 A1 ist ein Filmschaltwerk für eine Laufbild-Filmaufnahmekamera mit einer Filmführung bekannt, die zwei seitliche Filmführungskufen aufweist, auf denen der Rand eines Laufbildfilmes mit seinen Filmperforationen entlang gleitet. In der optischen Achse der Laufbild-Filmaufnahmekamera befindet sich ein Bildausschnitt oder Bildfenster, das intermittierend durch Öffnen und Schließen einer Irisblende oder einer rotierenden Umlaufblende freigegeben wird, so dass der auf der Filmführung intermittierend transportierte Laufbildfilm im Bereich des Bildfensters belichtet wird.

Der zum Filmtransport vorgesehene Greifermechanismus des Filmschaltwerks weist in die Filmperforation eintauchende Transportgreifer zum intermittierenden Transport des Laufbildfilmes und Sperrgreifer auf, die nach einem der Belichtungsfrequenz des Laufbildfilmes entsprechenden intermittierenden Filmtransportschritt durch die Transportgreifer mit einer Sperrgreiferspitze zu Korrektur und Sicherung des Bildstandes in die Filmperforation eintauchen. Die Transportgreiferspitzen beschreiben während des intermittierenden Transports des Laufbildfilmes eine in sich geschlossene Kurbelschleife, bei der die Transportgreiferspitzen zunächst in die Filmperforation eintauchen, dann den Filmtransportschritt ausführen, aus der Filmperforation wieder ausscheren und in ihre Ausgangslage zurückkehren. An den Umkehrpunkten der Kurbelschleife der Transportgreifer tauchen die eine Oszillationsbewegung beschreibenden Sperrgreiferspitzen mit hoher Geschwindigkeit in die Filmperforation ein, nehmen eine eventuelle Korrektur der Ausrichtung des Laufbildfilmes in der Filmebene vor und sichern den Bildstand des Laufbildfilmes während der Belichtung eines Filmbildes. Nach der Belichtung eines Filmbildes des Laufbildfilmes werden sie wieder herausgezogen, so dass der Laufbildfilm für einen weiteren Filmtransportschritt freigegeben ist.

Sowohl das Eintauchen der Transportgreiferspitzen und Sperrgreiferspitzen als auch die Übergabe von den Transportgreiferspitzen zu den Sperrgreiferspitzen und umgekehrt erfordert neben einer exakten Abstimmung der Kinematik der Transportgreifer und Sperrgreifer deren exakte Ausrichtung auf die Filmperforation, wenn unerwünschte Geräusche in Folge nicht exakt in die Filmperforation eintauchender Transport- und Sperrgreiferspitzen oder infolge einer mangelhaften zeitlichen Koordination der Bewegung der Transport- und Sperrgreifer auftreten. Darüber hinaus kann es auch zu Beschädigungen der Filmperforation oder der Oberfläche des Laufbildfilmes kommen.

Für die exakte Ausrichtung der Transport- und Sperrgreiferspitzen zur Filmperforation sowie zur korrekten Übergabe der Transportgreiferspitzen auf die Sperrgreiferspitzen ist die Kenntnis von den Abmessungen des Laufbildfilmes und deren Toleranzen unerlässlich. So beträgt beispielsweise bei einem 35 mm-Rohfilm nach DIN 15502 die Breite des Rohfilmes 34,97 mm mit einer Toleranz von ± 0,03 mm, die Teilung zwischen zwei aufeinander folgenden Perforationslöchern 4,74 mm mit einer Toleranz von ± 0,01 mm und der Abstand der Außenkante der Perforationslöcher von der Seitenkante des Laufbildfilmes 2 mm mit einer Toleranz von ± 0,07 mm. Diese Filmtoleranzen treten zwar nicht innerhalb einer Rohfilmrolle, wohl aber von Filmrolle zu Filmrolle in Abhängigkeit vom Herstellungslos oder der Rohfilm- oder Verwendungsart wie "Indoor-Film", "Tageslichtfilm" oder dergleichen auf.

Zur Geräuschminimierung ist es bekannt, die Übergabe von den Sperrgreifern auf die Transportgreifer so zu optimieren, dass durch eine Greiferschrittverstellung oder "Pitch-Verstellung" eine flexible, dem Laufbildfilm angepasste Hubeinstellung und Übergabe von den Sperrgreifern zu den Transportgreifern erfolgt. Diese Pitch-Verstellung gewährleistet einen geräuschoptimierten Filmtransport, weil die Transportgreifer selbst bei geschrumpftem Laufbildfilm in ihrer optimalen Greiferkurve exakt einstechen, transportieren und ausstechen können. Wegen der vorstehend genannten Toleranzen muss beispielsweise bei einem um 0,01 mm pro Perforations-Abstand geschrumpften Laufbildfilm der Einstich der Transportgreiferspitzen um 0,02 mm verstellt werden und gleichzeitig auch der Hub der Transportgreifer um beispielsweise 0,05 mm verkleinert werden. Diese Einstellung wird an einem mit dem Hubexzenter des Filmtransportmechanismus verbundenen Bedienelement, einem sogenannten "Pitch-Adjust" vorgenommen, das die vertikale Verstellung in ein annähernd horizontales Verschieben des Hubexzenters im 1/100-mm-Bereich übersetzt.

Trotz dieser bekannten Maßnahme der Pitch-Verstellung treten weiterhin störende Geräusche und Beschädigungen der Filmperforation oder der Oberfläche des Laufbildfilmes beim Filmtransport auf, die durch die vorliegende Erfindung vermieden oder minimiert werden sollen.

Aufgabe der vorliegenden Erfindung ist es daher, ein Filmschaltwerk der eingangs genannten Art anzugeben, das die beim Filmtransport auftretenden Geräusche weiter reduziert und Beschädigungen der Filmperforation bzw. der Oberfläche des Laufbildfilmes verhindert.

Diese Aufgabe wird erfindungsgemäß durch die Merkmale des Anspruchs 1 bzw durch das Verfahren nach Anspruch 11 gelöst.

Die erfindungsgemäße Lösung reduziert die beim Filmtransport auftretenden Geräusche bis hin zu den unvermeidbaren, minimalen Filmschaltwerksgeräuschen und verhindert das Auftreten von Beschädigungen der Filmperforation bzw. der Oberfläche des Laufbildfilmes zumindest in den die Filmszenen enthaltenden Laufbildfilmbereichen.

Der erfindungsgemäßen Lösung liegt die Erkenntnis zugrunde, dass Geräuschbildungen und Beschädigungen der Filmperforation und Oberfläche des Laufbildfilmes beim Filmtransport nicht nur auf die Ausrichtung der Transportgreiferspitzen und die Übergabe von den Sperrgreiferspitzen zu den Transportgreiferspitzen zurückzuführen sind, sondern auch darauf, dass die nach einem Filmtransportschritt in die Filmperforation zur Positionierung des Laufbildfilmes vor einem Bildfenster und zur Sicherung des Bildstandes vor der Belichtung eines Filmbildes in einer Laufbild-Filmaufnahmekamera oder zur Durchleuchtung des Filmbildes in einem Filmprojektor eintauchenden Sperrgreiferspitzen bei nicht exakter Ausrichtung auf die Filmperforation nicht fluchtend in die betreffenden Perforationslöcher des Laufbildfilmes eintauchen, sondern zumindest teilweise auf den die Filmperforationslöcher umgebenden Rand auftreffen, was nicht nur die störenden Geräuschentwicklungen verursacht, die besonders nachteilig bei Filmaufnahmekameras in Verbindung mit Tonaufnahmen sind, sondern auch zu Beschädigungen der Oberfläche des Laufbildfilmes bzw. der Filmperforation führen können.

Bei der exakten Ausrichtung der Sperrgreiferspitzen auf die Perforationslöcher des Laufbildfilmes sind unter anderem die vorstehend genannten Filmtoleranzen zu beachten, insbesondere der Abstand zwischen der Filmperforation und den Seitenkanten des Laufbildfilmes, die abhängig vom Hersteller, Herstellungszeitpunkt sowie vom Typ und der Verwendungsart des Rohfilmes abhängen. Dadurch bedingt treten konstante Abweichungen zwischen der Filmseitenführung und der Filmperforation im Bereich des Bildfensters der Laufbildkamera auf.

Da die Filmseitenführung als Teil als Teil des Filmschaltwerks aber mit der Ausrichtung der Greiferspitzen korreliert, kommt es insbesondere bezüglich der Sperrgreiferspitzen zu einem ständigen oder wiederholten Auftreffen der Sperrgreiferspitzen auf die Seitenränder der Filmperforation bzw. auf die die Filmperforationslöcher umgebende Oberfläche des Laufbildfilmes. Dies verursacht ein permanentes Geräusch und kann trotz geringer Toleranzen des Abstandes zwischen den Seitenkanten des Laufbildfilmes und der Filmperforation zu einer erheblichen Beschädigung der Filmperforation führen.

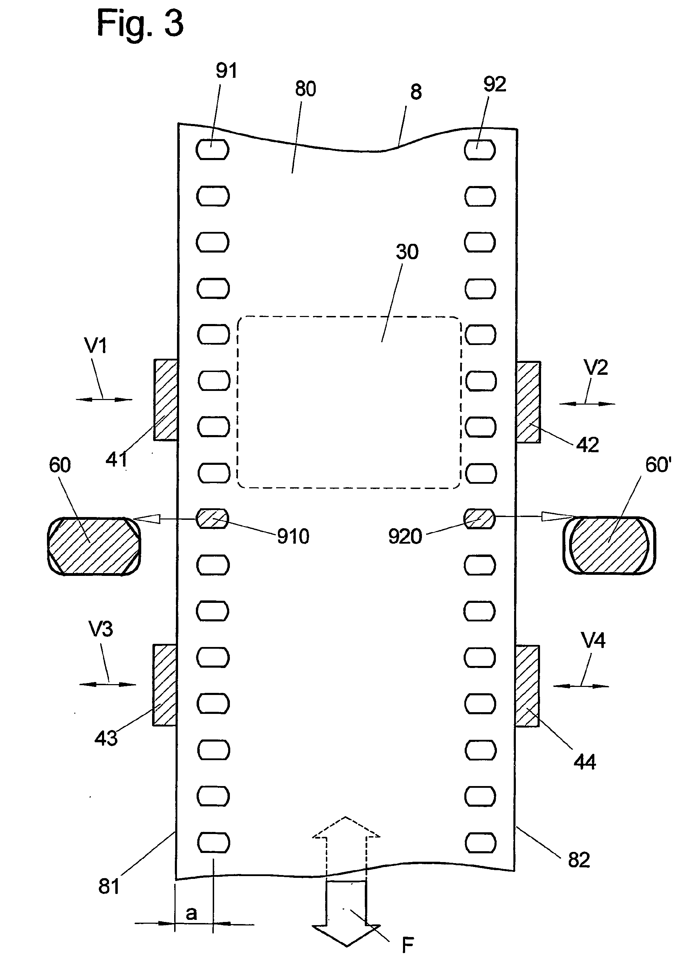

Diese Problematik tritt deshalb insbesondere hinsichtlich der Sperrgreiferspitzen auf, da bei einem doppelseitigen Sperrgreifer die eine der beiden Sperrgreiferspitzen ein Filmperforationsloch der Filmperforation (Perforationsloch 920 gemäß Fig. 3) mit seitlichem Spiel in der Höhe, d.h. in Längsrichtung des Laufbildfilmes, vollständig ausfüllt, während bei einem doppelseitigen Sperrgreifer die andere Sperrgreiferspitze oder bei einem einseitigen Sperrgreifer die einzelne Sperrgreiferspitze zur exakten Ausrichtung und Justierung des Laufbildfilmes in Bezug auf das Bildfenster ein Filmperforationsloch (Perforationsloch 910 gemäß Fig. 3) vollständig sowohl in der Höhe als auch in der Breite ausfüllt.

Zumindest bezüglich der letztgenannten Sperrgreiferspitze führt jede Änderung des Abstandes der Filmperforation von der Filmseitenkante, die bei bekannten Filmschaltwerken durch ein seitliches Anlaufschwert gebildet wird, gegen die der Laufbildfilm vorgespannt wird, wegen des festgelegten Abstandes der Sperrgreiferspitze(n) von der Filmseitenführung des Filmschaltwerks zu einem Auftreffen der Sperrgreiferspitze(n) auf die Kante eines Perforationsloches bzw. die Oberfläche des Laufbildfilmes.

Erfindungsgemäß ist ein erstes Paar Filmseitenführungselemente einander gegenüberstehend an der Bildmitte eines Bildfensters des Filmschaltwerks angeordnet.

Weiterhin ist ein zweites Paar Filmseitenführungselemente einander gegenüberstehend in Filmtransportrichtung beabstandet zum ersten Paar Filmseitenführungselemente angeordnet.

Durch die Verstellbarkeit und insbesondere durch die Justierung der Position zumindest eines Teils der Filmseitenführung in Bezug auf die und insbesondere senkrecht zu den Seitenkanten des Laufbildfilmes kann vor einer Filmbelichtung mittels einer Laufbild-Filmaufnahmekamera oder zur Projektion eines Laufbildfilmes mittels eines Filmprojektors die Filmperforation des Laufbildfilmes in Bezug auf den Greifermechanismus so ausgerichtet werden, dass es nachfolgend zu einem exakten Eintauchen der Sperrgreiferspitzen, insbesondere der die Filmperforationslöcher vollständig ausfüllenden Sperrgreiferspitze, kommt. Da der Abstand der Filmperforation zu den Seitenkanten des Laufbildfilmes bei einer Filmrolle, d.h. einer Filmcharge konstant ist und daher nachfolgend keine Abweichungen im Abstand zwischen den Seitenkanten des Laufbildfilmes und der Filmperforation auftreten, ist eine exakte Ausrichtung insbesondere der Sperrgreiferspitze(n) in die Filmperforation sichergestellt und damit gewährleistet, dass keine Geräusche oder Beschädigungen durch das Auftreffen der Sperrgreiferspitze(n) auf die Seitenkanten der Filmperforation oder die Oberfläche des Laufbildfilmes hervorgerufen werden.

Eine bevorzugte Ausführungsform der erfindungsgemäßen Lösung besteht darin, dass der verstellbare Teil der Filmseitenführung aus mindestens zwei zueinander beabstandeten Filmseitenführungselementen besteht.

Die Anordnung zueinander beabstandeter, seitlich verstellbarer Filmseitenführungselemente der durchgehenden Filmseitenführungen verringert die Reibung an den Seitenkanten des Laufbildfilmes bei gleichzeitig exakter Ausrichtung der Filmperforation insbesondere in Bezug auf die Sperrgreiferspitze(n) des Greifermechanismus.

Die Filmseitenführungselemente können entweder einzeln in Bezug auf die Seitenkanten des Laufbildfilmes justiert werden oder es werden die jeweils einer Seitenkante des Laufbildfilmes zugeordneten Filmseitenführungselemente in Bezug auf die Seitenkanten des Laufbildfilmes gemeinsam justiert.

Bei der vorstehend genannten Anordnung der Filmseitenführungselemente taucht die Sperrgreiferspitze eines einzelnen Sperrgreifers bzw. tauchen die Sperrgreiferspitzen eines doppelseitigen Sperrgreifers zwischen den beiden Paaren Filmseitenführungselemente und vorzugsweise in Filmtransportrichtung unmittelbar hinter bzw. vor dem Bildfenster in die Filmperforation ein.

Die Länge der Filmseitenführungselemente ist so bemessen, dass sie zumindest dem Abstand zweier Perforationslöcher der Filmperforation entspricht.

Die Einstellung der Filmführung bzw. Filmseitenführungselemente kann entweder mittels mindestens einer von einer Wand des Filmschaltwerks zugänglichen Stellschraube manuell oder mittels einer selbstjustierenden Einrichtung automatisch erfolgen.

Ein Verfahren zur Ausrichtung der Filmführung eines Laufbildfilms, der mittels eines Filmschaltwerks mit mindestens einem Transportgreifer intermittierend transportiert wird und der parallel zu seinen Seitenkanten zumindest eine Filmperforation aufweist, in die mindestens ein Sperrgreifer zur Sicherung des Bildstandes mit einer Sperrgreiferspitze eintaucht, ist dadurch gekennzeichnet, dass die Position der Filmführung während des Filmtransports zumindest teilweise senkrecht zu den Seitenkanten des Laufbildfilms verändert wird.

Die Veränderung der Position der Filmführung während des Filmtransports ermöglicht eine leichtere Einstellung der Positionierung der Filmperforation zur Ausrichtung auf die in die Filmperforation eintauchenden Sperrgreiferspitzen und schafft die Voraussetzung für eine leichte manuelle oder automatische Positionierung und Ausrichtung der Filmführung mittels eines geeigneten Sensors.

Dieser Sensor besteht erfindungsgemäß darin, dass von einer Bedienungsperson das während des Filmtransports erzeugte Geräusch oder die durch den Filmtransport hervorgerufenen Vibrationen erfasst und die Position und Ausrichtung der Filmführung manuell, beispielsweise durch Betätigen der Stellschraube, in Richtung einer Minimierung der Geräusche und Vibrationen verändert wird.

Alternativ hierzu kann eine Regeleinrichtung vorgesehen werden, die die während des Filmtransports erzeugten Geräusche und/oder Vibrationen als Istwert erfasst und durch Vorgabe entsprechender Stellgrößen.an die Filmführung die Geräusche und/oder Vibrationen auf ein Minimum reduziert.

Anhand eines in der Zeichnung dargestellten Ausführungsbeispieles soll der der Erfindung zugrundeliegende Gedanke näher erläutert werden. Es zeigen:
- Fig. 1: eine Seitenansicht einer Laufbild-Filmaufnahmekamera mit einem Längsschnitt durch deren Filmschaltwerk;
- Fig. 2: eine schematisch-perspektivische Explosionsdarstellung der Filmführung und des Greifermechanismus des Filmschaltwerks gemäß Fig. 1 und
- Fig. 3: eine Draufsicht auf einen Abschnitt eines Laufbildfilmes, an dessen Seitenkanten verstellbare Filmseitenführungselemente anliegen.

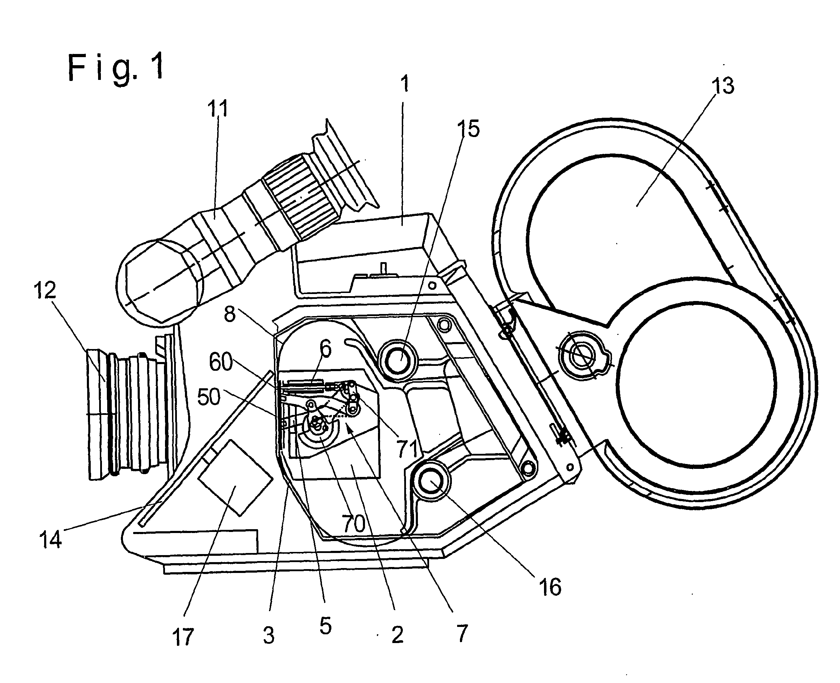

Fig. 1 zeigt eine Laufbild-Filmaufnahmekamera mit einem Kameragehäuse 1, einem Sucherokular 11, einem Kameraobjektiv 12 und einer an das Kameragehäuse 1 angelenkten Filmkassette 13, in der eine Filmvorratsspule mit einem unbelichteten Laufbildfilm 8 und eine Filmaufwickelspule mit dem mittels der Laufbild-Filmaufnahmekamera belichteten Laufbildfilm angeordnet sind. Das teilweise geöffnet dargestellte Kameragehäuse 1 enthält eine Filmabwickel-Zahnrolle 15 und eine Filmaufwickel-Zahnrolle 16, die den Laufbildfilm 8 kontinuierlich von der Filmvorratsspule der Filmkassette abwickeln bzw. kontinuierlich auf die Filmaufwickelspule der Filmkassette 13 aufwickeln.

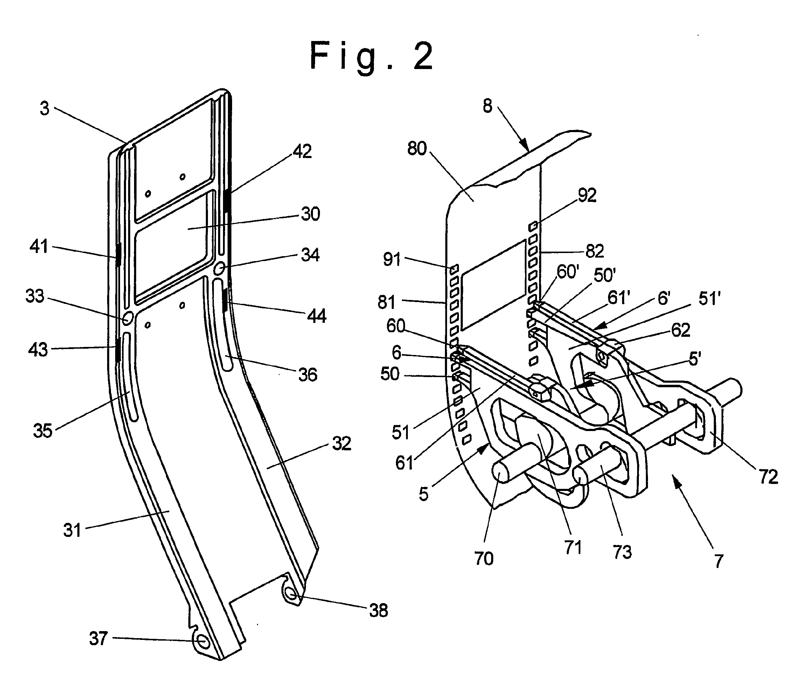

Ein in Fig. 1 in einer Seitenansicht und in Fig. 2 in einer schematisch-perspektivischen Ansicht dargestellter, in einem Filmschaltwerk 2 angeordneter Greifermechanismus 5, 5', 6, 6', 7 bewegt den Laufbildfilm 8 intermittierend an einem Bildfenster 30 einer Filmführung 3 vorbei, wo der Laufbildfilm 8 in der Transportphase des Greifermechanismus 5, 5', 6, 6', 7 durch eine sektorförmige Blendenscheibe einer rotierenden Umlaufblende 14 abgedeckt und durch einen sektorförmigen Ausschnitt der Blendenscheibe der rotierenden Umlaufblende 14 zur Belichtung eines Filmbildes freigegeben wird. Die sektorförmige Blendenscheibe der rotierenden Umlaufblende 14 wird von einem Blendenmotor 17 angetrieben, der elektrisch mit dem Antriebsmotor des Filmschaltwerks 2 gekoppelt ist, so dass die Geschwindigkeit beider Motoren synchron verlaufen. Alternativ kann eine unmittelbare mechanische Kopplung vorgesehen werden, bei der die rotierende Umlaufblende 14 über ein Getriebe mit dem Greifermechanismus 5, 5', 6, 6', 7 des Filmschaltwerks 2 verbunden ist.

Zum Ausgleich der von den Zahnrollen 15, 16 bewirken kontinuierlichen Filmbewegung und der durch den Greifermechanismus 5, 5', 6, 6', 7 bewirkten intermittierenden Filmbewegung bilden sich zu beiden Seiten des Bildfensters 30 Filmschlaufen aus.

Der Greifermechanismus 5, 5', 6, 6', 7 dient gemäß den Fig. 1 und 2 zum Transport und zur Sicherung des Bildstandes des Laufbildfilmes 8 und weist hierzu zwei Transportgreifer 5, 5' und zwei den Transportgreifern 5, 5' zugeordnete Sperrgreifer 6, 6' auf, deren Spitzen in die Perforationslöcher der Filmperforation 91, 92 eintauchen. Alternativ ist bei einem einseitig perforierten Laufbildfilm 8 jeweils ein Transportgreifer 5 sowie ein Sperrgreifer 6 vorgesehen. Weiterhin enthält der Greifermechanismus 5, 5', 6, 6', 7 einen Greiferantrieb 7 mit einer Antriebswelle 70, die mit einem nicht näher dargestellten Filmtransportmotor verbunden ist, eine Kurbel 71 und ein Steuerelement 72. Die Transportgreifer 5, 5' und Sperrgreifer 6, 6' sind als Tauchgreifer ausgebildet und weisen an ihren dem Laufbildfilm 8 zugewandten Enden linke und rechte Transportgreiferspitzen 50, 50' bzw. linke und rechte Sperrgreiferspitze 60, 60' auf, die abwechselnd in die Perforationslöcher der Filmperforationen 91, 92 des Laufbildfilmes 8 eintauchen.

Die Transportgreifer 5, 5' weisen eine Transportgreiferlasche 51, 51' auf, an deren einem Ende die Transportgreiferspitzen 50, 50' angeordnet ist und deren andere Enden mit dem Steuerelement 72 verbunden sind, das um eine Steuerelementachse 73 schwingt oder um diese Steuerelementachse 73 rotiert. Ein Mittenabschnitt der Transportgreiferlaschen 51, 51' ist über ein Greifergelenk mit einem Kurbelarm der Kurbel 71 verbunden und dieser über ein Kurbelgelenk an die Antriebswelle 70 angelenkt.

Die Sperrgreifer 6, 6' enthalten linke und rechte Sperrgreiferstifte 61, 61', an deren einem Ende die linke bzw. rechte Sperrgreiferspitze 60, 60' angeordnet ist und deren andere Enden über Sperrgreiferlaschen mit einem Sperrgreiferhebel 62 verbunden ist, der über eine Anlenkung am Steuerelement 72 angelenkt ist.

Die Transportgreifer 5, 5' führen bei einem Filmtransportschritt eine horizontale und eine vertikale Bewegung aus, wobei die Transportgreiferspitzen 50, 50' eine längliche, in sich geschlossene Kurve durchlaufen und an dem einen Ende der Kurve in die Perforationslöcher der Filmperforationen 91, 92 eintauchen und sie am anderen Ende wieder verlassen, so dass der Abstand der beiden Umkehrpunkte die Hublänge der Transportgreifer 5, 5' und damit einen Filmtransportschritt bestimmt.

Durch die Verbindung der Transportgreiferlaschen 51, 51' und des Sperrgreiferhebels 62 mit unterschiedlichen Anlenkpunkten am Steuerelement 72 wird eine gegenläufige horizontale Bewegung der Transportgreiferspitzen 50, 50' und der Sperrgreiferspitzen 60, 60' bewirkt, so dass sich während eines Filmtransportschrittes, bei dem der Laufbildfilm 8 um ein Filmbild weiterbewegt wird, die Sperrgreiferspitzen 60, 60' sich außerhalb der Filmebene 80 befinden, während die Transportgreiferspitzen 50, 50' in die Filmperforationen 91, 92 eingetaucht sind und den Laufbildfilm 8 entsprechend der vorgegebenen Hublänge zwischen dem oberen und unteren Umkehrpunkt bewegen.

Nach Beendigung eines Filmtransportschrittes verlassen die Transportgreiferspitzen 50, 50' die Filmperforationen 91, 92 und die Sperrgreiferspitzen 60, 60' tauchen in ein mit den Sperrgreiferspitzen 60, 60' fluchtendes Filmperforationsloch der Filmperforationen 91, 92 ein und gewährleisten einen festen Bildstand des Laufbildfilmes 8, von dem der zu belichtende Teil vor dem Bildfenster 30 positioniert ist, das während der Belichtung des Laufbildfilms 8 durch die vor dem Bildfenster 30 angeordnete rotierende Umlaufblende 14 freigegeben wird.

Die Filmführung 3 besteht gemäß Fig. 2 aus zwei seitlichen Filmauflagen 31, 32, auf denen der Rand des Laufbildfilmes 8 mit den beidseitigen, parallel zu den Seitenkanten 81, 82 des Laufbildfilmes 8 vorgesehenen Filmperforationen 91, 92 entlang gleitet. Zum Einsetzen der Filmführung 3 in das Filmschaltwerk 2 sind am unteren Ende der Filmführung 3 gefederte Kugeln 37, 38 vorgesehen, die form- und kraftschlüssig in entsprechende Aufnahmen des Filmschaltwerks 2 einrasten. Für die Transportgreiferspitzen 50, 50' sind zwei Nuten 35, 36 in der Filmlauffläche der Filmführung 3 vorgesehen, während unterhalb des Bildfensters 30 zwei Bohrungen 33, 34 angeordnet sind, in die die Sperrgreiferspitzen 60, 60' eintauchen können.

Voraussetzung für einen korrekten Bildstand, d. h. einen konstanten Abstand zweier aufeinander folgender, zu belichtender Filmbilder ist eine exakte Einhaltung der Hublänge der Transportgreifer 5, 5' in Filmtransportrichtung und damit eine exakte Positionierung der Perforationslöcher in der Verlängerung der Sperrgreiferspitzen 60, 60', damit diese in ein mit ihnen fluchtendes Perforationsloch eintauchen und nicht infolge einer fehlerhaften Positionierung des Laufbildfilmes 8 auf eine Kante oberhalb oder unterhalb eines Perforationsloches der Filmperforationen 91, 92 oder sogar auf einen Filmsteg zwischen zwei Perforationslöcher treffen. Eine fehlerhafte Positionierung des Laufbildfilmes 8 durch die Transportgreifer 5, 5' würde somit zu Geräuschen und gegebenenfalls zu erheblichen Beschädigungen des Laufbildfilmes 8 führen. Um dies zu vermeiden ist ein eingangs beschriebener "Pitch-Adjust" zur exakten Einstellung der Filmtransportschritte vorgesehen.

Neben der exakten Positionierung des Laufbildfilmes 8 in Filmtransportrichtung ist aber auch eine exakte Positionierung der Filmperforationen 91, 92 senkrecht zur Filmtransportrichtung in der Ebene der Oberfläche 80 des Laufbildfilmes 8 erforderlich, damit die Sperrgreiferspitzen 60, 60' nicht auf die Kanten rechts oder links neben den Perforationslöchern der Filmperforationen 91, 92 auftreffen und dadurch ebenfalls Geräusche erzeugen und Beschädigungen des Laufbildfilmes 8 verursachen. Die exakte seitliche Positionierung der Filmperforationen 91, 92 hängt im Wesentlichen von dem seitlichen Abstand der Filmperforationen 91, 92 von den Seitenkanten 81, 82 des Laufbildfilmes 8 ab, da die in die Filmperforationen 91, 92 eintauchenden Sperrgreiferspitzen 60, 60' der Sperrgreifer 6, 6' einen vorgegebenen, exakten Abstand zu der Seitenführung der Filmführung 3 aufweisen, an denen die Seitenkanten 81, 82 des Laufbildfilmes 8 beim Filmtransport und beim Bildstand anliegen.

Verändert sich der Abstand zwischen den Seitenkanten 81, 82 des Laufbildfilmes 8 und den Filmperforationen 91, 92, so würden wegen der nicht mehr exakt fluchtenden Anordnung der Perforationslöcher der Filmperforationen 91, 92 die Sperrgreiferspitzen 60, 60' auf die Kanten der Perforationslöcher oder auf die Oberfläche 80 des Laufbildfilmes 8 neben den Perforationslöchern auftreffen und damit die genannten Geräusche sowie gegebenenfalls Beschädigungen des Laufbildfilmes 8 verursachen. Während die rechte Sperrgreiferspitze 60' schmaler ausgeführt ist und demzufolge die Perforationslöcher 920 gemäß Fig. 3 in der Höhe vollständig, seitlich aber mit Spiel ausfüllt, stimmt die Querschnittsfläche der linken Sperrgreiferspitze 60 mit der Querschnittsfläche der Perforationslöcher 910 gemäß Fig. 3 überein und füllt demzufolge beim Eintauchen in die Perforationslöcher der Filmperforation 91 die Perforationslöcher 910 vollständig aus.

Aus diesem Grunde würde ein veränderter Abstand der Filmperforationen 91, 92 von den Seitenkanten 81, 82 des Laufbildfilmes 8 bezüglich der einen, die Perforationslöcher nur in der Höhe ausfüllenden rechten Sperrgreiferspitze 60' wegen des seitlichen Spiels möglicherweise noch zu keiner Geräuschentwicklung oder Beschädigung des Laufbildfilmes 8 führen, jedoch würde die linke Sperrgreiferspitze 60 mit Sicherheit nicht mit der Filmperforation 91 fluchten und demzufolge auf die Kanten der Perforationslöcher 910 oder die Oberfläche 80 des Laufbildfilms 8 auftreffen.

Da die zugelassenen Toleranzen und damit variierenden Abstände zwischen den Seitenkanten 81, 82 des Laufbildfilmes 8 und den Filmperforationen 91, 92 nicht innerhalb einer Filmrolle auftreten, sondern herstellungsbezogen bei getrennten Herstellungsprozessen bei unterschiedlichen Filmrollen auftreten, bietet eine einmalige Justierung des Abstandes zwischen der Filmseitenführung der Filmführung 3 und den Sperrgreifern 6, 6' die Möglichkeit, die Sperrgreiferspitzen 60, 60' exakt fluchtend zu den Filmperforationen 91, 92 auszurichten und damit Geräuschentwicklungen und Beschädigungen des Laufbildschirmes 8 vorzubeugen.

Demzufolge sind die Filmseitenführungen der Filmführung 3 seitlich verstellbar ausgebildet und bestehen aus jeweils paarweise am linken und rechten Rand der Filmführung 3 angeordneten Filmseitenführungselementen 41, 42 bzw. 43, 44. Die seitliche Verstellbarkeit der Filmseitenführungselemente 41 bis 44 kann beispielsweise über eine Exenter- oder Spindelanordnung erfolgen, die zur Wand des Filmschaltwerks 2 herausgeführt und mittels einer Justierschraube oder dergleichen betätigt werden kann.

Fig. 2 zeigt in perspektivischer Ansicht und Fig. 3 in einer Draufsicht die Zuordnung der Filmseitenführungselemente 41 bis 44 zu den Seitenkanten 81, 82 des zwischen den Filmseitenführungen angeordneten Laufbildfilmes 8. Wie Fig. 3 verdeutlicht, weisen die Filmseitenführungselemente 41 bis 44 in Filmtransportrichtung F eine solche Länge auf, dass sie mindestens zwei Perforationslöcher der Filmperforation 91, 92 abdecken, und sind in Richtung der Pfeile V1 bis V4 seitlich, d. h. senkrecht zur Filmtransportrichtung F verstellbar, so dass die Filmperforationen 91, 92, die einen konstanten Abstand a zu den Seitenkanten 81, 82 des Laufbildfilmes 8 aufweisen, ebenfalls seitlich verschoben werden.

Dadurch wird sichergestellt, dass die Sperrgreiferspitze 60 des linken Sperrgreifers 6 exakt fluchtend vollständig in das Perforationsloch 910 der linken Filmperforation 91 eintauchen kann und dabei das Perforationsloch 910 sowohl in der Breite als auch in der Höhe vollständig ausfüllt, während die Sperrgreiferspitze 60' des rechten Sperrgreifers 6' in das Perforationsloch 920 der rechten Filmperforation 92 eintaucht, ohne bei vollständigem Ausfüllen des Perforationsloches in der Höhe, d. h. in Filmtransportrichtung, auf eine Seitenkante des Perforationsloches 920 zu treffen.

Das eine Paar einander gegenüberliegender Filmseitenführungselemente 41, 42 ist zur Bildmitte des Bildfensters 30 ausgerichtet, während das andere Paar Filmseitenführungselemente 43, 44 von dem ersten Paar Filmseitenführungselemente 41, 42 beabstandet so angeordnet ist, dass die Sperrgreiferspitzen 60, 60' zwischen den beiden Paaren Filmseitenführungselemente 41 bis 44 in die Perforationslöcher 910, 920 der Filmperforationen 91, 92 eintauchen.

Die Justierung der Filmseitenführungselemente 41 bis 44 kann wahlweise einzeln in Bezug auf jedes der Filmseitenführungselemente 41 bis 44 oder pro Seite gemeinsam erfolgen, d. h. die Filmseitenführungselemente 41 und 43 bzw. 42 und 44 werden zur Justierung gemeinsam verstellt. Dadurch können auch Breitentoleranzen des Laufbildfilmes 8 ausgeglichen werden, wobei sichergestellt ist, dass insbesondere die mit ihrem gesamten Querschnitt ein Perforationsloch 910 ausfüllende Sperrgreiferspitze 60 exakt auf die Filmperforation 91 ausgerichtet ist.

Selbstverständlich beschränkt sich die Anordnung und Anzahl der Filmseitenführungselemente 41 bis 44 nicht auf das in den Fig. 2 und 3 dargestellte Ausführungsbeispiel, sondern es können auch weitere Filmseitenführungselemente vorgesehen oder deren Querschnittsform sowie Länge in Filmtransportrichtung F variiert werden.

Die Einstellung bzw. Justage der Filmführung 3 kann sowohl manuell als auch automatisch erfolgen. In der manuellen Variante wird vorzugsweise eine Stellschraube vorgesehen, die beispielsweise über ein Schneckengetriebe auf die Filmseitenführungselemente 41 bis 44 einwirkt und eine entsprechende Ausrichtung des Laufbildfilms 8 bewirkt.

Die manuelle Positionierung der Filmführung 3 erfolgt vorzugsweise während des Transports des Laufbildfilms 8. Dabei auftretende Transportgeräusche weisen auf ein Auftreffen der Sperrgreiferspitzen 60, 60' auf die Perforationskanten oder auf den Seitenrand des Laufbildfilms 8 hin, so dass durch eine entsprechende Veränderung der Position und/oder Ausrichtung der Filmseitenführungselemente 41 bis 44 der Laufbildfilm 8 so geführt wird, dass insbesondere die Sperrgreiferspitzen 60, 60' berührungsfrei oder nahezu berührungsfrei in die Perforationslöcher der Filmperforation 91, 92 eintauchen.

Alternativ hierzu kann eine Regelung der Positionierung der Filmführung 3 vorgesehen werden, bei der die während des Filmtransports auftretenden Geräusche und/oder Vibrationen erfasst werden. In Abhängigkeit von dem erfassten Filmstransportgeräusch und/oder den während des Filmtransports auftretenden Vibrationen wird die Position und/oder Ausrichtung der Filmseitenführungselemente 41 bis 44 derart verändert, dass die erzeugten Filmtransportgeräusche und/oder während des Filmtransports auftretenden Vibrationen minimiert werden, so dass sichergestellt ist, dass insbesondere die Sperrgreiferspitzen 60, 60' auf die Perforationsfläche der Filmperforation 91, 92 ausgerichtet sind und nicht auf die Kanten der Perforationslöcher oder den die Filmperforation 91, 92 umgebenden Rand des Laufbildfilms 8 auftreffen.

Eine weitere Alternative besteht in einer halbautomatischen Lösung, bei der die während des Filmtransports erzeugten Geräusche oder auftretenden Vibrationen erfasst und optisch angezeigt werden, so dass eine Bedienungsperson durch Veränderung einer auf die Filmseitenführungselemente 41 bis 44 einwirkenden Stellschraube das optisch angezeigte Geräusch und/oder die optisch angezeigten Vibrationen auf ein Minimum reduzieren kann.

### Bezugszeichenliste

- 1: Kameragehäuse
- 2: Filmschaltwerk
- 3: Filmführung
- 5, 5': Transportgreifer
- 6, 6': Sperrgreifer
- 7: Greiferantrieb
- 8: Laufbildfilm
- 11: Sucherokular
- 12: Kameraobjektiv
- 13: Filmkassette
- 14: rotierenden Umlaufblende
- 15: Filmabwickel-Zahnrolle
- 16: Filmaufwickel-Zahnrolle
- 17: Blendenmotor
- 30: Bildfenster
- 31,32: Filmauflagen
- 33, 34: Bohrungen
- 35, 36: Nuten
- 37, 38: gefederte Kugeln
- 41 - 44: Filmseitenführungselemente
- 50, 50': Transportgreiferspitzen
- 51, 51': Transportgreiferlaschen
- 60, 60': Sperrgreiferspitzen
- 61, 61': Sperrgreiferstift
- 62: Sperrgreiferhebel
- 70: Antriebswelle
- 71: Kurbel
- 72: Steuerelement
- 73: Steuerelementachse
- 80: Filmebene
- 81, 82: Seitenkanten des Laufbildfilmes
- 91, 92: Filmperforation
- 910, 920: Perforationsloch

## Patentansprüche

1. Filmschaltwerk (2) mit mindestens einem Transportgreifer (5, 5') zum intermittierenden Transport eines Laufbildfilmes (8), parallel zu dessen Seitenkanten (80, 81) zumindest eine Filmperforation (91, 92) vorgesehen ist, mit mindestens einem Sperrgreifer (6, 6'), der zur Sicherung des Bildstandes mit einer Sperrgreiferspitze (60, 60'), in die Filmperforation (91, 92) eintaucht, und mit einer den Laufbildfilm ausrichtenden Filmführung (3),
**dadurch gekennzeichnet,**
**dass** die Position der Filmführung (3) zumindest teilweise senkrecht zu den Seitenkanten (81, 82) des Laufbildfilmes (8) während des Filmtransports veränderbar ist, wobei ein erstes Paar beweglicher Filmseitenführungselemente (41, 42) einander gegenüberstehend an der Bildmitte eines Bildfensters (30) der Filmführung (3) und ein zweites Paar beweglicher Filmseitenführungsetemente (43, 44) einander gegenüberstehend in Filmtransportrichtung (F) beabstandet zum ersten Paar Filmseitenführungselemente (41, 42) angeordnet ist.

2. Filmschaltwerk nach Anspruch 1, **dadurch gekennzeichnet, dass** der veränderbare Teil der Filmführung (3) senkrecht zu den Seitenkanten (81, 82) des Laufbildfilmes (8) justierbar ist.

3. Filmschaltwerk nach Anspruch 1 oder 2, **dadurch gekennzeichnet, dass** der veränderbare oder justierbare Teil der Filmführung (3) aus mindestens zwei zueinander beabstandeten Filmseitenführungselementen (41 - 44) besteht.

4. Filmschaltwerk nach Anspruch 3, **dadurch gekennzeichnet, dass** die Filmseitenführungselemente (41 - 44) einzeln in Bezug auf die Seitenkanten (81, 82) des Laufbildfilmes (8) justierbar sind.

5. Filmschaltwerk nach Anspruch 3, **dadurch gekennzeichnet, dass** die jeweils einer Seitenkante (81, 82) des Laufbildfilmes (8) zugeordneten Filmseitenführungselemente (41 - 44) in Bezug auf die Seitenkanten (81, 82) des Laufbildfilmes (8) justierbar sind.

6. Filmschaltwerk nach mindestens einem der voranstehenden Ansprüche, **dadurch gekennzeichnet, dass** die Sperrgreiferspitze oder die Sperrgreiferspitzen (60, 60') zwischen den beiden Paaren Filmseitenführungselemente (41 - 44) in die Filmperforation (91, 92) eintaucht bzw. eintauchen.

7. Filmschaltwerk nach Anspruch 6, **dadurch gekennzeichnet, dass** die Sperrgreiferspitze oder die Sperrgreiferspitzen (60, 60') in Filmtransportrichtung (F) unmittelbar hinter bzw. vor dem Bildfenster (30) in die Filmperforation (91, 92) eintaucht bzw. eintauchen.

8. Filmschaltwerk nach mindestens einem der voranstehenden Ansprüche, **dadurch gekennzeichnet, dass** die an den Seitenkanten (81, 82) des Laufbildfilmes (8) anliegenden Seiten der Filmseitenführungselemente (41 - 44) eine Mindestlänge aufweisen, die dem Abstand zweier Perforationslöcher der Filmperforation (91, 92) entspricht.

9. Filmschaltwerk nach mindestens einem der voranstehenden Ansprüche, **dadurch gekennzeichnet, dass** die Filmseitenführungselemente (41 - 44) mittels mindestens einer von einer Wand des Filmschaltwerks (2) zugänglichen Stellschraube manuell einstellbar sind.

10. Filmschaltwerk nach mindestens einem der voranstehenden Ansprüche 1 bis 8, **dadurch gekennzeichnet, dass** die Filmseitenführungselemente (41 - 44) mittels einer selbstjustierenden Einrichtung automatisch einstellbar sind.

11. Verfahren zur Ausrichtung der Filmführung (3) eines Laufbildfilms (8), der mittels eines Filmschaltwerks (2) mit mindestens einem Transportgreifer (5, 5') intermittierend transportiert wird und der parallel zu seinen Seitenkanten (81, 82) zumindest eine Filmperforation (91, 92) aufweist, in die mindestens ein Sperrgreifer (6, 6') zur Sicherung des Bildstandes mit einer Sperrgreiferspitze (60, 60') eintaucht,
**dadurch gekennzeichnet,**
**dass** die Position der Filmführung (3) während des Filmtransports zumindest teilweise senkrecht zu den Seitenkanten (81, 82) des Laufbildfilms (8) in Abhängigkeit von den während des Filmstransports erzeugten Geräuschen und/oder während des Filmtransports auftretenden Vibrationen durch ein erstes Paar beweglicher Filmseitenführungselemente (41, 42), das einander gegenüberstehend an der Bildmitte eines Bildfensters (30) der Filmführung (3) angeordnet ist, und durch ein zweites Paar beweglicher Filmseitenführungselemente (43, 44), das einander gegenüberstehend in Filmtransportrichtung (F) beabstandet zum ersten Paar Filmseitenführungselemente (41, 42) angeordnet ist, verändert wird.

12. Verfahren nach Anspruch 11, **dadurch gekennzeichnet, dass** die Position der Filmführung (3) während des Filmtransports manuell verändert wird.

13. Verfahren nach Anspruch 11, **dadurch gekennzeichnet, dass** die Position der Filmführung (3) automatisch mittels einer Regeleinrichtung verändert wird, der ein Istwertsignal zugeführt wird, das den beim Filmtransport erzeugten Geräuschen oder auftretenden Vibrationen entspricht und die eine die Geräusche und/oder Vibrationen minimierende Stellgröße an die Filmführung zur Veränderung der Position der Filmführung abgibt.

## Claims

1. Film-feeding mechanism (2) having at least one transport claw (5, 5') for the intermittent transport of a motion picture film (8), parallel to the lateral edges (80, 81) of which at least one film perforation (91, 92) is provided, having at least one locking claw (6, 6') which dips into the film perforation (91, 92) with a locking claw tip (60, 60') in order to secure the picture steadiness, and having a film guide (3) aligning the motion picture film
**characterized**
**in that** the position of the film guide (3) can be changed, at least to some extent perpendicular to the lateral edges (81, 82) of the motion picture film (8) during the film transport, a first pair of moveable lateral film guide elements (41, 42) being disposed opposite each other at the picture centre of a picture window (30) of the film guide (3) and a second pair of moveable lateral film guide elements (43, 44) being disposed opposite each other in the film transport direction (F) at a distance from the first pair of lateral film guide elements (41, 42).

2. Film-feeding mechanism according to Claim 1, **characterized in that** the changeable part of the film guide (3) can be adjusted perpendicular to the lateral edges (81, 82) of the motion picture film (8).

3. Film-feeding mechanism according to Claim 1 or 2, **characterized in that** the changeable or adjustable part of the film guide (3) comprises at least two lateral film guide elements (41 - 44) spaced apart from each other.

4. Film-feeding mechanism according to Claim 3, **characterized in that** the lateral film guide elements (41 - 44) can be adjusted individually in relation to the lateral edges (81, 82) of the motion picture film (8).

5. Film-feeding mechanism according to Claim 3, **characterized in that** the lateral film guide elements (41 - 44) in each case assigned to one lateral edge (81, 82) of the motion picture film (8) can be adjusted in relation to the lateral edges (81, 82) of the motion picture film (8).

6. Film-feeding mechanism according to at least one of the preceding claims, **characterized in that** the locking claw tip or the locking claw tips (60, 60') dips or dip into the film perforation (91, 92) between the two pairs of lateral film guide elements (41 - 44).

7. Film-feeding mechanism according to Claim 6, **characterized in that** the locking claw tip or the locking claw tips (60, 60') dips or dip into the film perforation (91, 92) immediately behind or in front of the picture window (30) in the film transport direction (F).

8. Film-feeding mechanism according to at least one of the preceding claims, **characterized in that** the sides of the lateral film guide elements (41 - 44) bearing on the lateral edges (81, 82) of the motion picture film (8) have a minimum length which corresponds to the spacing of two perforation holes of the film perforation (91, 92).

9. Film-feeding mechanism according to at least one of the preceding claims, **characterized in that** the lateral film guide elements (41 - 44) can be adjusted manually by means of at least one setting screw accessible from a wall of the film-feeding mechanism (2).

10. Film-feeding mechanism according to at least one of the preceding Claims 1 to 8, **characterized in that** the lateral film guide elements (41 - 44) can be adjusted automatically by means of a self-adjusting device.

11. Method for aligning the film guide (3) of a motion picture film (8), which is transported intermittently by means of a film-feeding mechanism (2) having at least one transport claw (5, 5') and which has at least one film perforation (91, 92) parallel to its lateral edges (81, 82), into which perforation at least one locking claw (6, 6') dips with a locking claw tip (60, 60') in order to secure the picture steadiness,
**characterized**
**in that** the position of the film guide (3) is changed during the film transport as a function of the noise produced during the film transport and/or vibrations occurring during the film transport, at least to some extent perpendicular to the lateral edges (81, 82) of the motion picture film (8), by a first pair of moveable lateral film guide elements (41, 42), which is disposed opposite each other at the picture centre of a picture window (30) of the film guide (3) and by a second pair of moveable lateral film guide elements (43, 44), which is disposed opposite each other in the film transport direction (F) at a distance from the first pair of lateral film guide elements (41, 42).

12. Method according to Claim 11, **characterized in that** the position of the film guide (3) is changed manually during the film transport.

13. Method according to Claim 11, **characterized in that** the position of the film guide (3) is changed automatically by means of a control device, which is supplied with an actual value signal which corresponds to the noise produced or vibrations occurring during the film transport and which outputs an actuating variable minimizing the noise and/or vibrations to the film guide in order to change the position of the film guide.

## Revendications

1. Guide-film (2) comportant au moins une griffe de transport (5,5') pour le transport intermittent d'une pellicule cinématographique (8), parallèlement aux arêtes latérales (80,81) de celle-ci au moins une perforation du film (91,92) est prévue, avec au moins une griffe de guidage (6,6') qui plonge dans la perforation du film (91,92) par une pointe de griffe de guidage (60,60') afin de garantir la stabilité de l'image, et comportant un dispositif de guidage de film (3) alignant la pellicule cinématographique,
**caractérisé en ce que**
la position du dispositif de guidage de film (3) peut être modifiée au moins partiellement perpendiculairement aux arêtes latérales (81,82) de la pellicule cinématographique (8) pendant le transport du film, une première paire d'éléments de guidage des côtés de pellicule (41,42) mobiles étant disposés en se faisant face au centre de l'image d'une fenêtre de projection (30) du dispositif de guidage de film (3) et une deuxième paire d'éléments de guidage des côtés de pellicule (43,44) mobiles étant disposés en se faisant face dans la direction de transport du film (F) à distance de la première paire d'éléments de guidage des côtés de pellicule (41,42).

2. Guide-film selon la revendication 1, **caractérisé en ce que** la partie modifiable du dispositif de guidage de film (3) peut être ajustée perpendiculairement aux arêtes latérales (81,82) de la pellicule cinématographique (8).

3. Guide-film selon la revendication 1 ou 2, **caractérisé en ce que** la partie modifiable ou ajustable du dispositif de guidage de film (3) est constituée d'au moins deux éléments de guidage des côtés de pellicule (41-44) espacés l'un par rapport à l'autre.

4. Guide-film selon la revendication 3, **caractérisé en ce que** les éléments de guidage des côtés de pellicule (41-44) peuvent être ajustés individuellement par rapport aux arêtes latérales (81,82) de la pellicule cinématographique (8).

5. Guide-film selon la revendication 3, **caractérisé en ce que** les éléments de guidage des côtés de pellicule (41-44) respectivement associés à une arête latérale (81-82) de la pellicule cinématographique (8) peuvent être ajustés par rapport aux arêtes latérales (81,82) de la pellicule cinématographique (8).

6. Guide-film selon au moins une des revendications précédentes, **caractérisé en ce que** la pointe de griffe de guidage ou les pointes de griffes de guidage (60,60') plonge, respectivement plongent entre les deux paires d'éléments de guidage des côtés de pellicule (41-44) dans la perforation du film (91,92).

7. Guide-film selon la revendication 6, **caractérisé en ce que** la pointe de griffe de guidage ou les pointes de griffes de guidage (60,60') plonge, respectivement plongent dans la direction de transport du film (F) directement derrière, respectivement devant la fenêtre de projection (30)dans la perforation du film (91,92).

8. Guide-film selon au moins une des revendications précédentes, **caractérisé en ce que** les côtés des éléments de guidage des côtés de pellicule (41-44) reposant sur les arêtes latérales (81,82) de la pellicule cinématographique (8) présentent une longueur minimale, qui correspond à l'espace entre deux trous de perforation de la perforation du film (91,92).

9. Guide-film selon au moins une des revendications précédentes, **caractérisé en ce que** les éléments de guidage des côtés de pellicule (41-44) peuvent être réglés manuellement au moyen d'au moins une vis de réglage accessible à partir d'une paroi du guide-film (2).

10. Guide-film selon au moins une des revendications précédentes 1 à 8, **caractérisé en ce que** les éléments de guidage des côtés de pellicule (41-44) peuvent être réglés automatiquement au moyen d'un dispositif auto-ajustable.

11. Procédé d'alignement du dispositif de guidage de film (3) d'une pellicule cinématographique (8), qui est transportée de manière intermittente au moyen d'un guide-film (2) comportant au moins une griffe de transport (5,5') et qui présente parallèlement à ses arêtes latérales (81,82) au moins une perforation du film (91,92), dans laquelle au moins une griffe de guidage (6,6') plonge par une pointe de griffe de guidage (60,60') afin de garantir la stabilité de l'image,
**caractérisé en ce que**
la position du dispositif de guidage de film (3) est modifiée pendant le transport du film au moins partiellement perpendiculairement aux arêtes latérales (81,82) de la pellicule cinématographique (8), en fonction des bruits produits pendant le transport du film et/ou des vibrations survenant pendant le transport du film, par une première paire d'éléments de guidage des côtés de pellicule (41,42) mobiles, qui sont disposés en se faisant face au centre de l'image d'une fenêtre de projection (30) du dispositif de guidage de film (3), et par une deuxième paire d'éléments de guidage des côtés de pellicule (43,44) mobiles, qui sont disposés en se faisant face dans la direction de transport du film (F) à distance de la première paire d'éléments de guidage des côtés de pellicule (41,42).

12. Procédé selon la revendication 11, **caractérisé en ce que** la position du dispositif de guidage de film (3) pendant le transport du film est modifiée manuellement.

13. Procédé selon la revendication 11, **caractérisé en ce que** la position du dispositif de guidage de film (3) est modifiée automatiquement au moyen d'un dispositif de réglage, dans lequel un signal de valeur effective est introduit, lequel correspond aux bruits produits lors du transport du film ou aux vibrations générées, et qui délivre une grandeur de réglage minimisant les bruits et/ou les vibrations au dispositif de guidage de film afin de modifier la position du dispositif de guidage de film.
